# EUROPÄISCHE PATENTSCHRIFT

(11) **EP 0 424 314 B1**
(45) Veröffentlichungstag und Bekanntmachung des Hinweises auf die Patenterteilung: **07.12.1994**
(21) Anmeldenummer: 90810773.3
(22) Anmeldetag: 09.10.1990
(51) Int. Cl.: C08G 18/58, C08G 59/40, C08G 59/68, C08G 18/16

(54) **Heisshärtbare Gemische**
Heat curable mixtures
Mélanges thermodurcissables

(30) Priorität: 18.10.1989 CH 3788/89
(43) Veröffentlichungstag der Anmeldung: 24.04.1991
(73) Patentinhaber: CIBA-GEIGY AG, 4002 Basel (CH)
(72) Erfinder: Munk, Kurt, Dr., W-7889 Grenzach (DE); Roth, Martin, Dr., CH-1735 Giffers (CH)

(56) Entgegenhaltungen:
- EP-A- 130 454
- US-A- 3 935 087
- US-A- 4 390 644

## Beschreibung

Die vorliegende Erfindung betrifft heisshärtbare Gemische auf Basis von Epoxidharzen und Di- oder Polyisocyanatverbindungen, welche als Härtungsmittel bestimmte Mono-oder Disulfoniumsalze enthalten, sowie die daraus durch thermische Härtung erhaltenen Produkte.

Heisshärtbare Gemische auf Basis von Epoxidharzen und Di- oder Polyisocyanatverbindungen sind bekannt. Als Härtungsmittel für solche Gemische werden beispielsweise in der EP-Anmeldung 130,454 und in der DE-OS 33 23 084 tertiäre Amine oder Imidazole, insbesondere Additionskomplexe von Bortrihalogeniden mit tertiären Aminen und Imidazolen oder Oniumsalze von tertiären Aminen und Imidazolen, eingesetzt.

In der DE-OS 36 00 764 verwendet man für heisshärtbare Gemische aus Epoxidharzen und Polyisocyanatverbindungen tertiäre oder quaternäre Ammoniumsalze von alkylierend wirkenden oder sauren Estern von organischen Phosphonsäuren oder der Phosphorsäure. Ferner werden in der EP-Anmeldung 319 473 zum Härten von Gemischen aus Epoxidharzen und Polyisocyanatverbindungen bestimmte Cyanoacetamide eingesetzt.

Die aus diesen bekanten heisshärtbaren Gemischen hergestellten Formstoffe weisen im allgemeinen gute mechanische Eigenschaften auf, doch bezüglich ihrer Wärmeformbeständigkeit lassen sich noch zu wünschen übrig. Es wurde nun gefunden, dass man bei Verwendung von bestimmten araliphatischen Mono- oder Disulfoniumsalzen als Härtungsmittel für Gemische aus Epoxidharzen und Di- oder Polyisocyanatverbindungen Formstoffe mit einer hohen Vernetzungsdichte und somit hoher Wärmeformbeständigkeit erhält.

Gegenstand vorliegender Erfindung sind somit heisshärtbare Gemische, enthaltend
(a) ein Epoxidharz mit durchschnittlich mehr als einer 1,2-Epoxidgruppe im Molekül,
(b) eine Di- oder Polyisocyanatverbindung und
(c) ein Sulfoniumsalz der Formeln I bis IV 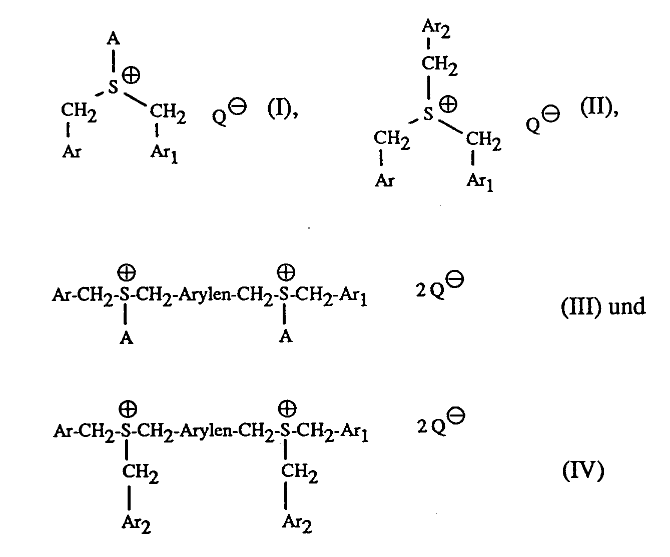 worin A für ein C₁-C₁₂-Alkyl, C₃-C₈-Gycloalkyl, C₄-C₁₀-Cycloalkylalkyl, unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl steht, Ar, Ar₁ und Ar₂ unabhängig voneinander je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl oder ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Naphthyl bedeuten, Arylen je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenylen oder ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Naphthylen bedeutet und Q^{⊖} für SbF₆^{⊖}, AsF₆^{⊖} oder SbF₅OH^{⊖} steht, wobei die Komponenten (a) und (b) in solchen Mengen enthalten sind, dass im Gemisch ein Äquivalentverhältnis von Epoxid- zu Isocyanatgruppen von 0,1 bis 5 vorliegt und das Härtungsmittel (c) in Mengen von 0,01 bis 10 Gew.-%, bezogen auf die Menge der Komponenten (a) und (b), eingesetzt wird.

Vorzugsweise enthalten die erfindungsgemässen Gemische als Epoxidharz (a) Di- oder Polyepoxidverbindungen, insbesondere aliphatische, cycloaliphatische oder aromatische Di- oder Polyepoxidverbindungen oder Mischungen davon.

Als Epoxidharz (a) eignen sich alle Typen von Epoxidharzen, wie beispielsweise solche, die direkt an Sauerstoff-, Stickstoff- oder Schwefelatome gebundene Gruppen der Formel V 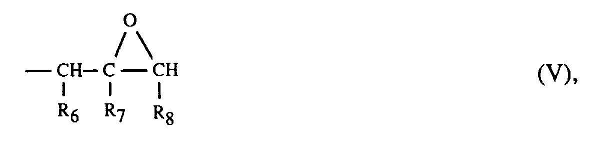
worin entweder R₆ und R₈ je ein Wasserstoffatom darstellen, in welchem Fall R₇ dann ein Wasserstoffatom oder eine Methylgruppe bedeutet, oder R₆ und R₈ zusammen - CH₂CH₂- oder -CH₂CH₂CH₂- darstellen, in welchem Fall R₇ dann ein Wasserstoffatom bedeutet, enthalten.

Als Beispiele solcher Harze seien Polyglycidyl- und Poly-(β-methylglycidyl)-ester genannt, die man durch Umsetzung einer zwei oder mehrere Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, und von aromatischen Polycarbonsäuren, wie Phthalsäure, Isophthalsäure und Terephthalsäure, ableiten.

Weitere Beispiele sind Polyglyicidyl- und Poly-(β-methylglycidyl)-ether, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Ether lassen sich mit Poly-(epichlorhydrin) aus acyclischen Alkoholen wie Ethylenglykol, Diethylenglykol und höheren Poly-(oxyethylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen, wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3, und aus Alkoholen mit aromatischen Kernen, wie N,N-Bis-(2-hydroxyethyl)-anilin und p,p'-Bis-(2-hydroxyethylamino)-diphenylmethan, herstellen. Man kann sie ferner aus einkernigen Phenolen, wie Resorcin und Hydrochinon, sowie mehrkernigen Phenolen, wie Bis-(4-hydroxyphenyl)-methan, 4,4-Dihydroxydiphenyl, Bis-(4-hydroxyphenyl)-sulfon, 1,1,2,2,-Tetrakis-(4-hydroxyphenyl)-ethan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden, wie Formaldehyd, Acetaldehyd, Chloral und Furfurol, mit Phenolen, wie Phenol selbst und durch Chloratome oder Alkylgruppen mit jeweils bis zu neun Kohlenstoffatomen ringsubstituiertem Phenol, wie 4-Chlorphenol, 2-Methylphenol und 4-tert.-Butylphenol, gebildeten Novolaken herstellen.

Poly-(N-glycidyl)-verbindungen umfassen beispielsweise Triglycidylisocyanurat sowie N,N'-Diglycidylderivate von cyclischen Alkylenharnstoffen, wie Aethylenharnstoff und 1,3-Propylenharnstoff, und Hydantoinen, wie 5,5-Dimethylhydantoin.

Poly-(S-glycidyl)-verbindungen sind zum Beispiel die Di-S-glycidylderivate von Dithiolen, wie Aethan-1,2-dithiol und Bis-(4-mercaptomethylphenyl)-ether.

Beispiele für Epoxidharze mit Gruppen der Formel V, worin R₆ und R₈ zusammen eine -CH₂-CH₂-Gruppe bedeuten, sind Bis-(2,3-epoxycyclopentyl)-ether, 2,3-Epoxycyclopentyl-glycidylether, 1,2-Bis-(2,3-epoxycyclopentyloxy)-ethan und 3,4-Epoxycyclohexylmethyl-2',4'-epoxycyclohexancarboxylat.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidylether/Glycidylester der Salicylsäure oder p-Hydroxybenzoesäure, N-Glycidyl-N'-(2-glycidyloxypropyl)-5,5-dimethylhydantoin und 2-Glycidyloxy-1,3-bis-(5,5-dimethyl-1-glycidylhydantoinyl-3)propan.

Speziell bevorzugt werden aromatische Epoxidharze, wie Novolak-Epoxidharze oder Diglycidylether von Bisphenolen.

Als Di- oder Polyisocyanatverbindung (b) enthalten die erfindungsgemässen Gemische vorzugsweise aliphatische, cycloaliphatische oder aromatische Isocyanate oder Mischungen davon.

Bevorzugt werden Isomerengemische aus 4,4'- und 2,4'-Diisocyantodiphenylmethan, polyolmodifizierte Polyisocyanate und Gemische von flüssigen Polyisocyanaten oder von flüssigen Polyisocyanaten mit Carbodiimid-Polyisocyanaten eingesetzt.

Weitere verwendbare Polyisocyanate sind beispielsweise Hexan-1,6-diisocyanat, Cyclohexan-1,3-diisocyanat und Isomere, 4,4'-Diisocyanatodicyclohexylmethan, 3-Isocyanatomethyl-2,5,5-trimethylcyclohexylisocyanat, 1,3-Dimethylbenzol-ω,ω'-diisocyanat und Isomere, 1-Methylbenzol-2,4-diisocyanat und Isomere, Naphthalin-1,4-diisocyanat, Diphenylether-4,4'-diisocyanat und Isomere, Diphenylsulfon-4,4'-diisocyanat und Isomere sowie tri- oder höherfunktionelle Isocyanate, wie beispielsweise 3,3',4,4'-Diphenylmethantetraisocyanat. Ferner können auch Isocyanate verwendet werden, die in üblicher Weise mit Phenol oder Kresol maskiert sind. Dimere und Trimere der genannten mehrwertigen Isocyanate sind ebenfalls einsetzbar. Derartige Polyisocyanate besitzen entständige freie Isocyanatgruppen und enthalten einen oder mehrere Uretdion-und/oder Isocyanuratringe. Verfahren zur Herstellung verschiedener Arten solcher Trimerer und Uretdione sind beispielsweise in den US-Patentschriften 3 494 888, 3 108 100 und 2 977 370 beschrieben.

Vorzugsweise bedeutet A in den Formeln I und III ein C₁-C₁₂-Alkyl, bedeuten Ar, Ar₁ und Ar₂ in den Formeln I bis IV unabhängig voneinander je ein unsubstituiertes oder durch C₁-C₈-Alkyl, C₁-C₄-Alkoxy, Cl oder Br einfach oder mehrfach substituiertes Phenyl und steht Q^{⊖} für SbF₆^{⊖} oder SbF₅OH^{⊖}, wie beispielsweise Dibenzylethylsulfoniumhexafluoroantimonat.

Die erfindungsgemässen Gemische enthalten als Komponente (c) vorzugsweise ein Sulfoniumsalz der Formel I oder II mit der bevorzugten Bedeutung von A, Ar, Ar₁, Ar₂ und Q^{⊖}.

Besonders bevorzugte Sulfoniumsalze sind solche der Formel II, worin Ar, Ar₁ und Ar₂ unabhängig voneinander je ein unsubstituiertes oder durch C₁-C₈-Alkyl, C₁-C₄-Alkoxy, Cl oder Br substituiertes Phenyl bedeuten und Q^{⊖} für SbF₆^{⊖} oder SbF₅OH^{⊖} steht, wie insbesondere Tribenzylsulfoniumhexafluoroantimonat oder Tris-(p-methylbenzyl)-sulfoniumhexafluoroantimonat.

Steht A in Formel I und III für ein C₁-C₁₂-Alkyl, so kann dieses geradkettig oder verzweigt sein. Beispielsweise kann A für ein Methyl, Ethyl, Isopropyl, n-Butyl, sek.-Butyl, tert.-Butyl, n-octyl oder n-Dodecyl stehen.

Geeignete Cycloalkyle sind beispielsweise Cyclopropyl, Cyclopentyl, Cyclohexyl und Cyclooctyl.

Als Cycloalkylalkyle seien beispielsweise Cyclohexylmethyl und Cyclohexylethyl genannt.

Bedeuten A, Ar, Ar₁ und Ar₂ in den Formeln I bis IV ein substituiertes Phenyl bzw. Naphthyl, so können gleich oder verschieden substituiertes Phenyl oder Naphthyl vorliegen. Beispiele dafür sind p-Tolyl, Xylyl, Ethylphenyl, Methoxyphenyl, Ethoxyphenyl, p-Chlorphenyl, 2,4-, 3,4- oder 2,6-Dichlorphenyl, Bromphenyl, Acetylphenyl, Trimethylphenyl, Methylnapthyl, Methoxynaphthyl, Ethoxynaphthyl, Chlornaphthyl, Bromnaphthyl und Biphenyl.

Bedeutet Arylen in den Formeln III und IV ein substituiertes Phenylen oder Naphthylen, so können als solche beispielsweise Methylphenylen, Ethylphenylen, Methoxyphenylen, Ethoxyphenylen, Chlorphenylen, Dichlonphenylen, Bromphenylen, Acetylphenylen, Trimethylphenylen, Methylnapthylen, Methoxynaphthylen, Ethoxynaphthylen, Chlornaphthylen oder Bromnaphthylen stehen. Vorzugsweise bedeutet Arylen ein unsubstituiertes Phenylen oder Naphthylen.

Die in den erfindungsgemässen Gemischen enthaltenen Sulfoniumsalze der Formeln I und II können nach einem der in Houben-Weyl, Methoden der organischen Chemie, Band IX, Seiten 171 ff (1955), sowie Ergänzungsband E 11, Seiten 405 ff (1985), offenbarten Verfahren hergestellt werden, indem man beispielsweise ein Sulfid der Formel VI

Ar-CH₂-S-CH₂-Ar₁ (VI),

worin Ar und Ar₁ die gleiche Bedeutung wie in Formel I oder II haben, entweder (a) mit molaren Mengen eines Oxoniumsalzes der Formel VII 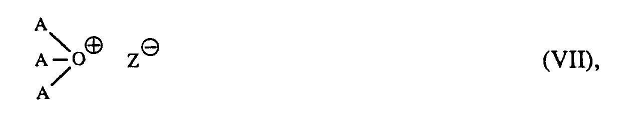
worin A die gleiche Bedeutung wie in Formel I hat und Z^{⊖} für Q^{⊖}, SbCl₆^{⊖}, BF₄^{#SDF#} oder PF₆^{⊖} steht, zu Verbindungen der Formel I oder der Formel Ia 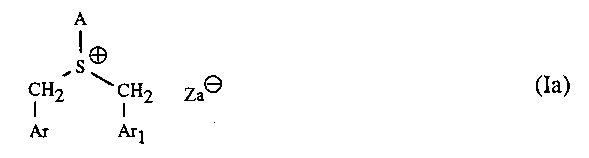
umsetzt, worin Za^{⊖} für SbCl₆^{⊖}, BF₄^{⊖} oder PF₆^{⊖} steht, und anschliessend die Verbindungen der Formel Ia durch Anionenaustausch mit einem Alkalimetallsalz oder einem quaternären Ammoniumsalz der Formel VIII

Y^{⊕}Q^{⊖} (VIII),

worin Y für ein Alkalimetallkation oder N(R₄)^{⊕} steht, wobei R ein Wasserstoff oder ein C₁-C₄-Alkyl bedeutet, und Q^{⊖} die gleiche Bedeutung wie in Formel I hat, zu einer Verbindung der Formel I umsetzt, oder
(b) in Gegenwart einer starken Säure mit mindestens einer molaren Menge eines Alkohols der Formel IX

Ar₂-CH₂-OH (IX),

worin Ar₂ die gleiche Bedeutung wie in Formel II hat, zu einem Sulfoniumsalz dieser Säure der Formel IIa 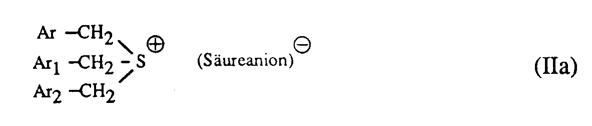
umsetzt und anschliessend das Sulfoniumsalz der Formel IIa mit einem Alkalisalz oder einem quaternären Ammoniumsalz der Formel VIII zu einer Verbindung der Formel II umsetzt.

In analoger Weise können die erfindungsgemässen Verbindungen der Formeln III und IV hergestellt werden, indem man beispielsweise 1 Mol einer Verbindung der Formel X

Ar-CH₂-S-CH₂-Arylen-CH₂-S-CH₂-Ar₁ (X),

worin Ar und Ar₁ die gleiche Bedeutung wie in Formel III oder IV haben, entweder (a) mit 2 Mol eines Oxoniumsalzes der Formel VI zu Verbindungen der Formel III oder der Formel IIIa 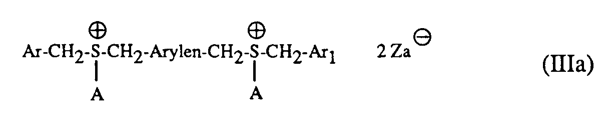
umsetzt, worin Za^{⊖} für SbCl₆^{⊖}, BF₄^{⊖} oder PF₆^{⊖} steht, und anschliessend die Verbindung der Formel IIIa durch Anionenaustausch mit einem Alkalimetallsalz oder einem quaternären Ammoniumsalz der Formel VIII zu einer Verbindung der Formel III umsetzt, oder
(b) in Gegenwart einer starken Säure mit 2 Mol eines Alkohols der Formel VIII zu einem Disulfoniumsalz dieser Säure der Formel IVa 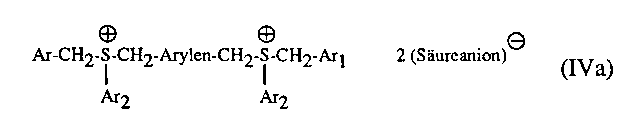
umsetzt und anschliessend das Disulfoniumsalz der Formel IVa mit einem Alkalisalz oder einem quaternären Ammoniumsalz der Formel VIII zu einer Verbindung der Formel IV umsetzt.

Die Verbindungen der Formeln VI, VII, VIII, IX und X stellen bekannte Verbindungen dar, die zum Teil im Handel erhältlich sind.

Beispielsweise werden Sulfide der Formel VI in Houben-Weyl, Band 9, Seite 93 (1955), oder Band E 11, Seite 158 (1985) beschrieben oder sind im Handel von den Firmen Fluka und Aldrich erhältlich.

Oxoniumsalze der Formel VII sind zum Beispiel aus Houben-Weyl, Band 6/3, Seite 328 (1965), oder aus dem US-Patent 3 585 227 bekannt.

Alkalimetallsalze oder quaternäre Ammoniumsalze der Formel VIII, wie beispielsweise NaSbF₆, NaAsF₆ oder NH₆AsF₆, sind im Handel z.B. von der Firma Morton Thiokol erhältlich. Desgleichen sind Alkohole der Formel IX, wie beispielsweise Benzylalkohol oder chlorierte Benzylalkohole, im Handel erhältlich.

Verbindungen der Formel X können in bekannter Weise hergestellt werden, indem man beispielsweise 1 Mol eines unsubstituierten oder substituierten α,α'-Dihalogenmethylarylens der Formel XI

Hal-CH₂-Arylen-CH₂-Hal (XI)

in Gegenwart von Alkalilauge mit 2 Mol eines unsubstituierten oder substituierten Mercaptans der Formel XII

Ar-CH₂-SH bzw. Ar₁-CH₂-SH (XII)

zu Verbindungen der Formel X umsetzt.

Verbindungen der Formel I oder III, worin A für den Rest der Formel XIII 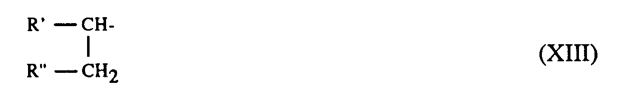
steht, worin R' und R'' unabhängig voneinander je ein Wasserstoffatom oder zusammen mit dem Ethylenrest ein bis zu 12 C-Atome enthaltendes Alkyl oder ein bis zu 8 C-Atome enthaltendes Cycloalkyl bedeuten, können ferner hergestellt werden, indem ein Sulfid der Formel VI in Gegenwart einer starken Säure mit mindestens einer molaren Menge eines Olefins der Formel XIV

R'-CH = CH-R'' (XIV)

zu einem Sulfoniumsalz der Formel XV bzw. XVI 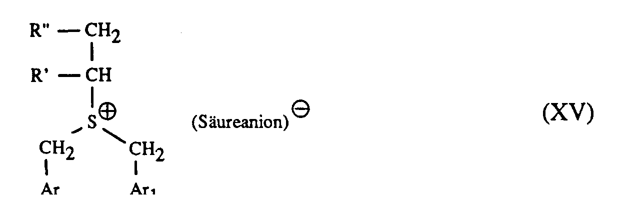 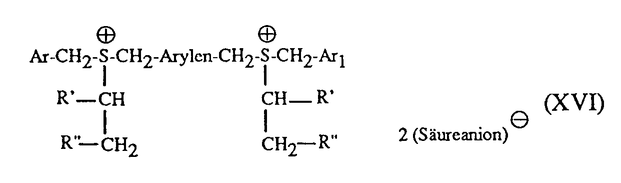
umsetzt und anschliessend das Sulfoniumsalz der Formel XV bzw. XVI mit einem Alkalisalz oder einem quaternären Ammoniumsalz der Formel VIII zu einer Verbindung der Formel I bzw. III, worin A den Rest der Formel XIII bedeutet, umsetzt.

Als Olefine der Formel XIV verwendet man beispielsweise Ethylen, Propylen, Buten-(1), Buten-(2), Isobutylen, Penten-(1), Penten-(2), Cyclobuten, Cyclopenten oder Cyclohexen und als starke Säuren beispielsweise H₂SO₄, HPF₆, HBF₄, HClO₄ oder CF₃SO₃H.

Die erfindungsgemässen heisshärtbaren Gemische enthalten die Komponenten (a) und (b) vorzugsweise in solchen Mengen, dass im Gemisch ein Aequivalentverhältnis der Epoxid-zu den Isocyanatgruppen von 0,3 bis 2,5, insbesondere ein solches von 0,4 bis 1, vorliegt.

In den erfindungsgemässen Gemischen wird das Härtungsmittel (c) vorzugsweise in Mengen von 0,1 bis 5 Gew.-%, insbesondere von 0,1 bis 2,5 Gew.-%, bezogen auf die Menge der Komponenten (a) und (b), eingesetzt.

Die erfindungsgemässen heisshärtbaren Gemische lassen sich in beliebiger Form erhalten, z.B. als homogene flüssige Gemische oder in homogener oder inhomogener glasiger Form. Homogene glasige Produkte können in an sich bekannter Weise zum Beispiel durch Verflüssigung der festen Komponenten (a) und (b), gegebenenfalls unter Zusatz geeigneter Lösungsmittel, Erhitzen auf Temperaturen über ihren Glasumwandlungspunkt, Zugabe des Härtungsmittels gemäss Formel I oder IV und Abkühlung der entstandenen Gemische erhalten werden.

Die erfindungsgemässen heisshärtbaren Gemische können auch weitere, bekannte und üblicherweise in der Technik polymerisierbarer Materialien eingesetzte Zusatzstoffe enthalten. Beispiele für solche Zusatzstoffe sind Pigmente, Farbstoffe, Füllstoffe und Verstärkungsmittel, Flammhemmstoffe, Antistatika, Haftvermittler, Verlaufmittel, Antioxidantien und Lichtschutzmittel. Als Füllstoffe eignen sich mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit.

Die erfindungsgemässen heisshärtbaren Gemische lassen sich ganz allgemein zur Herstellung von gehärteten Produkten einsetzen und können in der dem jeweils speziellen Anwendungsgebiet angepassten Formulierung, beispielsweise als Beschichtungsmasssen, Lacke, Pressmassen, Tauchharze, Giessharze, Imprägnierharze, Laminierharze, 1-oder 2-Komponenten-Klebstoffe oder Matrixarze, eingesetzt werden.

Zur Aushärtung der erfindungsgemässen Gemische wendet man im allgemeinen Temperaturen im Bereich von 60 bis 250°C, vorzugsweise 60 bis 220°C, insbesondere 80 bis 200°C, an.

Man kann an den erfindungsgemässen Gemischen auch erst eine Vorhärtung bei tieferen Temperaturen bis zum Gelieren der härtbaren Zusammensetzung durchführen, an die sich dann eine Aushärtung bei höheren Temperaturen anschliesst.

Die aus den erfindungsgemässen Gemischen durch thermische Härtung erhaltenen Produkte zeichnen sich vor allem durch eine hohe Wärmeformbeständigkeit aus.

Ein weiterer Gegenstand der Erfindung sind somit auch die durch thermische Härtung der erfindungsgemässen Gemische erhaltenen Produkte, die feste, unlösliche und unschmelzbare, dreidimensional vernetzte Produkte darstellen. Die Aushärtung erfolgt in der Regel unter gleichzeitiger Formgebung zu Formköpern, Imprägnierungen, Beschichtungen oder Verklebungen.

### Herstellung der verwendeten Härtungsmittel:

### 1. Tris-(p-methylbenzyl)-sulfoniumhexafluoroantimonat

a) In ein Reaktionsgefäss, versehen mit Rührer und Thermometer, gibt man die Lösung von 269,0 g (1,12 Mol) Natriumsulfid-hydrat und 12,0 g Tetrabutylammoniumhydrogensulfat (Phasentransferkatalysator) in 300 ml Wasser. Unter intensivem Rühren werden unterhalb von 40°C 212,6 g (1,52 Mol) 4-Methylbenzylchlorid innerhalb 30 Minuten (Min.) zugetropft. Das Reaktionsgemisch wird 4 1/2 Stunden (h) bei Raumtemperatur (RT) und anschliessend 1/2 h bei 50-60°C gerührt. Das Reaktionsgemisch wird auf 0-5°C abgekühlt und 1/2 h bei dieser Temperatur gehalten. Das Reaktionsgemisch wird filtriert, und der Rückstand in etwa 2 Liter Essigsäureethylester gelöst. Die organische Phase wird 2 mal mit deionisiertem Wasser ausgeschüttelt (pH ∼6) und über MgSO₄ getrocknet. Man entfernt den Essigsäureethylester am Rotationsverdampfer. Der Rückstand wird am Hochvakuum über Nacht bei RT getrocknet. Man erhält 174,8 g (95 % der Theorie) Di-(p-methylbenzyl)-sulfid als leicht gelblich weisse Kristalle mit einem Smp. von 74-76°C.

| Elementaranalyse für C₁₆H₁₈S: | | | |
|---|---|---|---|
| Berechnet: (%) | C = 79,29 | H = 7,49 | S = 13,23 |
| Bestimmt : (%) | C = 79,16 | H = 7,3 | S = 13,47. |

¹H-NMR (100 MHz, CDCl₃), in ppm:
2,33 (Singulett, 6 H); 3,56 (Singulett, 4 H); 7,15 (Singulett, 8 H).
b) In einem Reaktionsgefäss (750 ml), versehen mit Rührer und Thermometer, werden unter N₂-Atmosphäre 85,1 g (0,351 Mol) Di-(p-methylbenzyl)-sulfid und 51,5 g (0,421 Mol) p-Methylbenzylalkohol in 250 ml Methylenchlorid vorgelegt. Unter Rühren tropft man innerhalb von 40 Min. 142,7 g einer etwa 54 gew.-%igen HBF₄-Lösung in Diethylether bei 20-30°C Innentemperatur zu. Das Reaktionsgemisch wird bei RT während 2 h gerührt. Das Reaktionsgemisch wird mit Methylenchlorid verdünnt, und 4 mal mit deionisiertem Wasser ausgeschüttelt (pH 5-6). Man trocknet die organische Phase mit MgSO₄ und entfernt das Methylenchlorid am Rotationsverdampfer. Das nicht vollständig vom Methylenchlorid befreite Produkt wird in 250 ml Toluol während etwa 1 h bei RT und anschliessend 1 h bei 0-5°C verrührt. Die nun ausgefallenen Kristalle werden abgenutscht und mit wenig Toluol nachgewaschen. Das Produkt wird am Hochvakuum bei Raumtemperatur während 19 h getrocknet. Man erhält 118,6 g Tris-(p-methylbenzyl)-sulfoniumtetrafluoroborat als weisse Kristalle mit einem Smp. von 168-170°C.
¹H-NMR (100 MHz, d₆-Aceton) in ppm:
2,33 (Singulett, 9 H); 4,83 (Singulett, 6 H); 7,25 (Quartett, 12 H).
c) Die Mischung aus 100 g (230 mMol) Tris-(p-methylbenzyl)-sulfoniumtetrafluoroborat in 500 ml Methylenchlorid wird bei RT unter N₂-Atmosphäre in einem 3-Liter Rundkolben gelöst und dann werden 119,0 g (460 mMol) Natriumhexafluoroantimonat zugegeben. Die Mischung wird während 3 h bei RT gerührt und dann filtriert. Das Filtrat wird am Rotationsverdampfer vom Lösungsmittel befreit und das zurückbleibende, zähflüssige Oel über Nacht bei Raumtemperatur stehen gelassen. Das kristallisierte Produkt wird während 2 h bei RT verrührt, erneut filtriert und am Hochvakuum trockengesaugt.
Nach dem Umkristallisieren in Isopropanol erhält man 117,1 g (87 % der Theorie) Tris-(p-methylbenzyl)-sulfoniumhexafluoroantimonat als weisse Kristalle mit einem Smp. von 88-91°C.

| Elementaranalyse für C₁₆H₁₈S: | | | |
|---|---|---|---|
| Berechnet: (%) | C = 49,29 | H = 4,67 | S = 5,5 |
| Bestimmt : (%) | C = 99,8 | H = 4,6 | S = 6,4. |

¹H-NMR (100 MHz, d₆-Aceton) in ppm:
2,34 (Singulett, 9 H); 4,85 (Singulett, 6 H); 7,25 (Quartett, 12 H).

### 2. Tribenzylsulfoniumhexafluoroantimonat

a) In einem 750 ml Reaktionsgefäss, versehen mit Rührer, Thermometer und Tropftrichter, werden 21,4 g (0,1 Mol) Dibenzylsulfid und 10,8 g (0,1 Mol) Benzylalkohol in 300 ml Essigsäure vorgelegt.
Unter Rühren tropft man 20 ml konzentrierte Schwefelsäure innerhalb von 5 Minuten (Min.) zu. Anschliessend erwärmt man das Reaktionsgemisch mit einem Oelbad auf 70°C Innentemperatur und rührt während 2 h. Die Hauptmenge Essigsäure wird abdestilliert und der Rückstand auf 200 ml Wasser gegossen. Man belässt die Suspension 1/2 h bei 0-5°, filtriert und trocknet den kristallinen Rückstand im Vakuum bei RT. Es verbleiben 36,5 g (91 % der Theorie) Tribenzylsulfoniumhydrogensulfat als farblose Kristalle mit einem Smp. 170°C (Zersetzung).
b) 16,64 g (0,041 Mol) Tribenzylsulfoniumhydrogensulfat werden in 750 ml Methanol warm gelöst. Zur trüben Lösung gibt man 16,04 g (0,062 Mol) festes Natriumhexafluoroantimonat und rührt 1 h bei RT. Nach Zugabe von 1 Spatel Aktivkohle wird filtriert und das klare Filtrat mit 750 ml Wasser versetzt. Die ausgefallenen Kristalle werden abfiltriert, getrocknet, mit 100 ml Ether gewaschen und nochmals getrocknet. Man gewinnt 16,41 g (74 % der Theorie) Tribenzylsulfoniumhexafluoroantimonat als farblose Kristalle mit einem Smp. vom 170°C (Zersetzung).

| Elementaranalyse für C₂₁H₂₁SSbF₆: | | | |
|---|---|---|---|
| Berechnet: (%) | C = 46,61 | H = 3,91 | S = 5,92. |
| Gefunden : (%) | C = 47,44 | H = 3,99 | S = 6,09. |

¹H-NMR (100 MHz, d₆-DMSO) in ppm:
4,78 (Singulett, 6 H); 7,32 (Singlettoid, 15 H).

### 3. Dibenzylphenylsulfoniumhexafluoroantimonat

a) In ein Reaktionsgefäss, versehen mit Rührer und Thermometer gibt man die Lösung von 75,0 g (0,374 Mol) Benzylphenylsulfid, 60,73 g (0,561 Mol) Benzylalkohol und 350 ml Methylenchlorid. Unter Rühren tropft man innerhalb von 35 Min. 182,45 g (1,12 Mol) 54 gew.-%ige HBF₄ in Diethylether bei einer Innentemperatur von 20-30°C zu. Das Reaktionsgemisch wird anschliessend bei RT 2 h gerührt. Man verdünnt das Reaktionsgemisch mit 300-400 ml Methylenchlorid und extrahiert 4 mal mit Wasser (pH ∼6). Anschliessend trocknet man die organische Phase über MgSO₄ und entfernt am Rotationsverdampfer das Lösungsmittel. Das zurückgebliebene gelbbraune Oel wird in 400 ml Toluol verrührt, und bei 0-5°C etwa 1 h kristallisieren gelassen. Man filtriert die Suspension und wäscht den Rückstand mit wenig, gekühltem Toluol (0-5°C) nach. Das reine Produkt wird am Hochvakuum bei RT über Nacht getrocknet. Man erhält 123,8 g (87 % der Theorie) Dibenzylphenylsulfoniumtetrafluoroborat als weisse Kristalle mit einem Smp. von 110-115°C.
¹H-NMR (in d₆-Aceton, 100 MHz) in ppm:
5,30 (Quartett, 4 H); 7,22-8,02 (Multiplett, 15 H).
b) Die Mischung aus 123,0 g (0,325 Mol) Dibenzylsulfoniumtetrafluoroborat in 400 ml Methylenchlorid wird in einem 2 Liter Rundkolben bei RT unter N₂ klar gelöst. Anschliessend werden 117,8 g Natriumhexafluoroantimonat zugegeben und bei RT während 3 1/2 h gerührt. Man filtriert nun die Suspension über Kieselgel und entfernt vom Filtrat das Lösungsmittel mit dem Rotationsverdampfer. Den leicht rötlichen viskosen Rückstand löst man erneut in 250 ml Methanol und nach der Zugabe von 250 ml Wasser lässt man das Produkt 1-2 h bei RT kristallisieren. Die Suspension wird filtriert und man wäscht den Rückstand mit Wasser nach. Anschliessend trocknet man das Produkt am Hochvakuum bei RT über Nacht. Man erhält 163,9 g (95 % der Theorie) Dibenzylphenylsulfoniumhexafluoroantimonat als weisse Kristalle mit einem Smp. von 105-109°C.

| Elementaranalyse | | | | | |
|---|---|---|---|---|---|
| Berechnet: (%) | C = 45,6 | H = 3,63 | S = 6,08 | Sb = 23,09 | F = 21,62 |
| Gefunden : (%) | C = 46,5 | H = 3,7 | S = 6,1 | Sb = 22,4 | F = 20,6. |

¹H-NMR (d₆-Aceton in MHz) in ppm:
5,37 (Quartett, 4 H); 7,25-8,04 (Multiplett, 15 H).

### 4. Di-(4-chlorbenzyl)-benzylsulfoniumhexafluoroantimonat

a) Man setzt 5,66 g (20 mMol) Di-(4-chlorbenzyl)-sulfid mit 2,6 g (24 mMol) Benzylalkohol und 8,13 g (50 mMol) 54 gew.-%iger HBF₄ in 20 ml Methylenchlorid wie in Beispiel 3a) angegeben ist um. Man erhält 7,44 g (80 % der Theorie) Di-(4-chlorbenzyl)-benzylsulfoniumtetrafluoroborat als weisse Kristalle mit einem Smp. von 123-125°C.
¹H-NMR (100 MHz, CDCl₃) in ppm:
4,71 (Singulett, 6 H); 7,27 (Dublett, 12 H).
b) Eine Mischung aus 7,0 g (15,2 mMol) Di-(4-chlorbenzyl)-phenylsulfoniumtetrafluoroborat und 25 ml Methylenchlorid wird unter N₂ in einem 100 ml Rundkolben klar gelöst und auf 0-5°C abgekühlt. Bei dieser Temperatur werden 5,9 g (22,8 mMol) Natriumhexafluoroantimonat zugegeben und etwa 3 h lang gerührt. Das Reaktionsgemisch wird filtriert und das Filtrat am Rotationsverdampfer vom Lösungsmittel befreit. Man gibt nun zum Rückstand 50 ml deionisiertes Wasser und kristallisiert das Produkt aus. Man lässt es 1-2 h bei 0-5°C kristallisieren. Die nun durch eine Filtration gewonnenen Kristalle werden mit Wasser gewaschen und am Hochvakuum bei RT über Nacht getrocknet. Man erhält 8,26 g Di-(4-chlorbenzyl)-benzylsulfoniumhexafluoroantimonat als weisse Kristalle mit einem Smp. von 75-77°C.

| Elementaranalyse | | | | |
|---|---|---|---|---|
| Berechnet: (%) | C = 41,34 | H = 3,14 | S = 5,26 | Cl = 11,62 |
| Gefunden: (%) | C = 41,24 | H = 3,15 | S = 5,08 | Cl = 12,37. |

¹H-NMR (100 MHz) in ppm:
5,0 (Multiplett, 6 H); 7,44 (Multiplett, 13 H).

### 5. Dibenzylcyclohexylsulfoniumhexafluoroantimonat

a) In einem Reaktionsgefäss (350 ml), versehen mit Rührer und Thermometer, werden unter N₂-Atmosphäre 53,6 g (0,25 Mol) Dibenzylsulfid und 23,33 g (0,28 Mol) Cyclohexen in 100 ml Methylenchlorid gelöst. Unter Rühren tropft man innerhalb einer Stunde 48,8 g einer etwa 54 gew.-%igen HBF₄-Lösung in Diethylether bei 20 - 30°C Innentemperatur zu. Das orange gefärbte Reaktionsgemisch wird 1 h bei RT gerührt, es werden 10 ml Cyclohexen nachgegeben und 2 h weitergerührt, nochmals 10 ml Cyclohexen und 1 ml HBF₄-Lösung nachgegeben und weitere 2 h bei RT gerührt.
Man verdünnt die Reaktionslösung mit 100 ml Methylenchlorid und schüttelt 3 mal mit deionisiertem Wasser aus (pH 5 - 6). Die organische Phase trocknet man über Magnesiumsulfat, filtriert und entfernt das Lösungsmittel am Rotationsverdampfer. Zum Rückstand (90,3 g / 94% Rohausbeute) gibt man 200 ml Cyclohexan und verrührt das Gemisch bei RT. Es bildet sich ein farbloser Niederschlag, der nach Abfiltrieren und Trocknen im Vakuum bei RT farblose Kristalle vom Smp. 95 - 100°C ergibt. Man erhält 61,45 g (64 % Ausbeute) Dibenzylcyclohexylsulfoniumtetrafluoroborat.
¹H-NMR (100 MHz, d₆-Aceton) in ppm:
1,1 - 2,3 (Multiplett + d₆-Aceton); 3,3 - 4,2 (Multiplett, 1 H); 4,7 - 5,2 (Multiplett, 4 H); 7,2 - 7,8 (Multiplett, 10 H).
b) 61,2 g (0,16 Mol) Dibenzylcyclohexylsulfoniumtetrafluoroborat werden in 250 ml Methylenchlorid unter N₂-Schutzgas gelöst und mit 61,9 g (0,24 Mol) Natriumhexafluoroantimonat versetzt. Man rührt 2,5 h bei RT und filtriert anschliessend vom gebildeten Natriumtetrafluoroborat ab. Das Filtrat wird 2 mal mit deionisiertem Wasser ausgeschüttelt, über Magnesiumsulfat getrocknet und abrotiert. Der feste Rückstand (89,19 g / 104 % Rohausbeute) wird aus 500 ml Methanol heiss umkristallisiert und ergibt nach dem Trocknen im Vakuum bei RT farblose Kristalle vom Smp. 111-115°C. Man erhält 53,9 g (63 % Ausbeute) Dibenzylcyclohexylsulfoniumhexafluoroantimonat.

| Elementaranalyse für C₂₀H₂₅SSbF₆: | | | |
|---|---|---|---|
| Berechnet (%) | C = 45,05 | H = 4,73 | S = 6,01 |
| Gefunden (%) | C = 45,13 | H = 4,51 | S = 6,27 |

¹H-NMR (100 MHz, d-Chloroform) in ppm:
1,2 - 2,4 (Multiplett, 10 H); 3,56 (Multiplett, 1 H); 4,28 - 4,67 (Quartett, 4 H); 7,35 (Singulett, 10 H).

Beispiel 1: Das Harzgemisch, bestehend aus 200 g Bisphenol F-diglycidylether mit einem Epoxidgehalt von 6,1 Aequivalenten/kg und einer Viskosität von 1200 mPa·s bei 25°C, 90 g Diisocyanatodiphenylmethan, präpolymerisiert, mit einem Isocyanatgehalt von 6,05 Aequivalenten/kg und einer Viskosität von 120 mPa·s bei 25°C (erhältlich unter der Handelsbezeichnung ISONATE ®M 340 von der Firma DOW) und 90 g Diisocyanatodiphenylmethan mit einem Isocyanatgehalt von 7,92 Aequivalenten/kg und einer Viskosität von 12 mPa·s bei 25°C (erhältlich unter der Handelsbezeichnung BAYMIDUR® KU 3-5002 von der Firma BAYER), wird bei Raumtemperatur mit 686 g Quarzmehl W 12 (Handelsprodukt der Firma Quarzwerke Frechen), welches auf 120°C vorgewärmt ist, vermengt und über Nacht bei etwa 80°C unter Rühren im Vakuum bei 1,3-2,6 mbar entgast. Zu dieser Vormischung werden 4 g Tris-(p-methylbenzyl)-sultoniumhexafluoroantimonat eingerührt und das Gemisch nochmals unter Vakuum während 30 Minuten weitergerührt. Die erhaltene homogene, etwa 80°C warme Giessharzmischung wird in auf 80°C vorgewärmte Metallformen gegossen und in einem Umluftofen bei 150°C innerhalb 4 Stunden soweit gehärtet, dass eine Entformung der Prüfkörper leicht möglich ist. Die Nachhärtung der Prüfkörper erfolgt 16 Stunden bei 200°C. Die erhaltenen Prüfkörper weisen folgende Eigenschaften auf:

| | |
|---|---|
| Gelierzeit bei 140°C (Minuten, Sekunden) | = 4′50˝ |
| Biegefestigkeit gemäss ISO 178 (N/mm²) | = 117,8 |
| Randfaserdehnung gemäss ISO 178 (%) | = 1,08 |
| Schlagbiegefestigkeit gemäss ISO R 179 (J/m²) | = 7,4 |
| Wärmeformbeständigkeit gemäss ISO 75 (°C) | = > 250 |
| Torsionsmodulabfall gemäss ISO R 537, angegeben als Wendepunkt in °C | = 218 |

Beispiele 2 und 3: Beispiel 1 wird wiederholt und anstelle von Tris-(p-methylbenzyl)-sulfoniumhexafluoroantimonat werden als Härtungsmittel nun 6 g Tribenzylsulfoniumhexafluoroantimonat (Beispiel 2) bzw. 2,5 g Dibenzylphenylsulfoniumhexafluoroantimonat (Beispiel 3) eingesetzt. Nach Härtung der Gemische gemäss Beispiel 1 erhält man Prüfkörper mit den folgenden Eigenschaften.

| | | Beispiel 2 | Beispiel 3 |
|---|---|---|---|
| Gelierzeit bei 140°C (Minuten, Sekunden) | | 5′51˝ | 4′50˝ |
| Biegefestigkeit gemäss ISO 178 (N/mm²) | | 128,5 | 129,3 |
| Randfaserdehnung gemäss ISO 178 (%) | | 1,13 | 1,14 |
| Schlagbiegefestigkeit gemäss ISO R 179 (J/m²) | | 6,4 | 8,0 |
| Brennbarkeit gemäss UL 94 nach Lagerung der Prüfkörper | 2 Tage bei 23°C | HB *) | HB |
| | und 7 Tage bei 70°C | HB | HB |
| Wärmeformbeständigkeit gemäss ISO 75 (°C) | | > 250 | > 250 |

| | | | |
|---|---|---|---|
| *) Stufe HB = horizontal burning | | | |

Beispiele 4 und 5: Beispiel 1 wird wiederholt und anstelle von Tris-(p-methylbenzyl)-sulfoniumhexafluoroantimonat werden als Härtungsmittel nun 3,8 g Di-(4-chlorbenzyl)-benzylsulfoniumhexafluoroantimonat (Beispiel 4) bzw. 3,8 g Dibenzylcyclohexylsulfoniumhexafluoroantimonat (Beispiel 5) eingesetzt. Nach Härtung der Gemische gemäss Beispiel 1 erhält man Prüfkörper mit folgenden Eigenschaften.

| | | Beispiel 4 | Beispiel 5 |
|---|---|---|---|
| Gelierzeit bei 140°C (Minuten) | | 18′ | 32′ |
| Biegefestigkeit gemäss ISO 178 (N/mm²) | | 123,8 | 117,8 |
| Randfaserdehnung gemäss ISO 178 (%) | | 1,20 | 1,07 |
| Brennbarkeit gemäss UL 94 nach Lagerung der Prüfkörper | 2 Tage bei 23°C | HB *) | HB |
| | und 7 Tage bei 70°C | HB | HB |
| Wärmeformbeständigkeit gemäss ISO 75 (°C) | | 238 | 239 |

| | | | |
|---|---|---|---|
| *) Stufe HB = horizontal burning | | | |

## Patentansprüche

1. Heisshärtbare Gemische, enthaltend
(a) ein Epoxidharz mit durchschnittlich mehr als einer 1,2-Epoxidgruppe im Molekül,
(b) eine Di- oder Polyisocyanatverbindung und
(c) ein Sulfoniumsalz der Formeln I bis IV 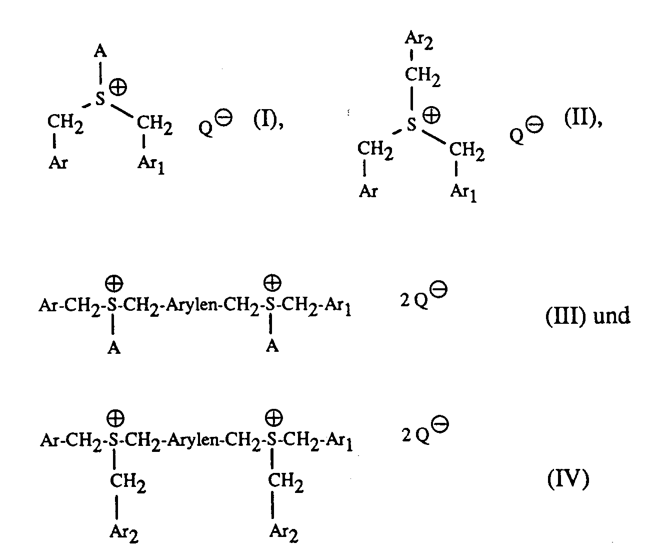 worin A für ein C₁-C₁₂-Alkyl, C₃-C₈-Cycloalkyl, C₄-C₁₀-Cycloalkylalkyl, unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl steht, Ar, Ar₁ und Ar₂ unabhängig voneinander je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl oder ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Naphthyl bedeuten, Arylen je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenylen oder ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Naphthylen bedeutet und Q^{⊖} für SbF₆^{⊖}, AsF₆^{⊖} oder SbF₅OH^{⊖} steht, wobei die Komponenten (a) und (b) in solchen Mengen enthalten sind, dass im Gemisch ein Äquivalentverhältnis von Epoxid-zu Isocyanatgruppen von 0,1 bis 5 vorliegt und das Härtungsmittel (c) in Mengen von 0,01 bis 10 Gew.-%, bezogen auf die Menge der Komponenten (a) und (b), eingesetzt wird.

2. Gemische gemäss Anspruch 1, worin das Epoxidharz (a) eine aliphatische, cycloaliphatische oder aromatische Di- oder Polyepoxidverbindung darstellt.

3. Gemische gemäss Anspruch 1, worin das Epoxidharz (a) ein aromatisches Epoxidharz ist.

4. Gemische gemäss Anspruch 1, worin die Di- oder Polyisocyanatverbindung (b) ein aliphatisches, cycloaliphatisches oder aromatisches Isocyanat darstellt.

5. Gemische gemäss Anspruch 1, worin die Di- oder Polyisocyanatverbindung (b) ein Isomerengemisch aus 4,4'- und 2,4'-Diisocyanatodiphenylmethan, polyolmodifiziertes Polyisocyanat, ein Gemisch von flüssigen Polyisocyanaten oder von flüssigen Polyisocyanaten mit Carbodiimid-Polyisocyanaten darstellt.

6. Gemische gemäss Anspruch 1, worin die Komponente (c) ein Sulfoniumsalz der Formel I oder II darstellt.

7. Gemische gemäss Anspruch 1, worin die Komponente (c) ein Sulfoniumsalz der Formel I oder II ist, worin A ein C₁-C₁₂-Alkyl bedeutet, Ar, Ar₁ und Ar₂ unabhängig voneinander je ein unsubstituiertes oder durch C₁-C₈-Alkyl, C₁-C₄-Alkoxy, Cl oder Br einfach oder mehrfach substituiertes Phenyl bedeuten und Q^{⊖} für SbF₆^{⊖} oder SbF₅OH^{⊖} steht.

8. Gemische gemäss Anspruch 1, worin die Komponente (c) ein Sulfoniumsalz der Formel II ist, worin Ar, Ar₁ und Ar₂ unabhängig voneinander je ein unsubstituiertes oder durch C₁-C₈-Alkyl, C₁-C₄-Alkoxy, Cl oder Br substituiertes Phenyl bedeuten und Q^{⊖} für SbF₆^{⊖} oder SbF₅OH^{⊖} steht.

9. Gemische gemäss Anspruch 1, enthaltend als Komponente (c) Tris-(p-methylbenzyl)-sulfoniumhexafluoroantimonat, Tribenzylsulfoniumhexafluoroanumonat oder Dibenzylphenylsulfoniumhexafluoroantimonat.

10. Die durch thermische Härtung der Gemische gemäss Anspruch 1 erhaltenen Produkte.

## Claims

1. A heat-curable mixture comprising
(a) an epoxy resin having on average more than one 1,2-epoxide group in the molecule,
(b) a di- or polyisocyanate compound and
(c) a sulfonium salt of the formulae I to IV 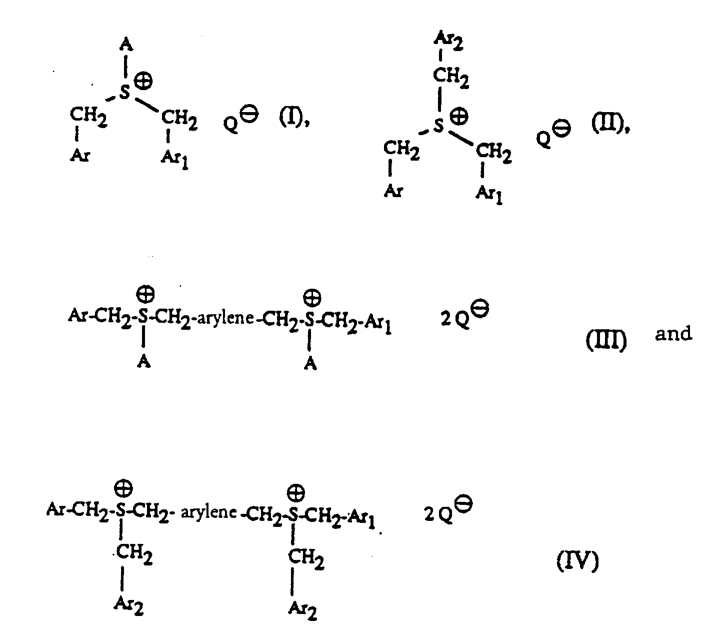 in which A is C₁-C₁₂ alkyl, C₃-C₈cycloalkyl, C₄-C₁₀cycloalkyalkyl or phenyl which is unsubstituted or substituted by one or more of C₁-C₈alkyl, C₁-C₄alkoxy, halogen, nitro, phenyl, phenoxy, alkoxycarbonyl having 1-4 C atoms in the alkoxy radical or acyl having 1-12 C atoms, Ar, Ar₁ and Ar₂ independently of one another are each phenyl which is unsubstituted or substituted by one or more of C₁-C₈alkyl, C₁-C₄alkoxy, halogen, nitro, phenyl, phenoxy, alkoxycarbonyl having 1-4 C atoms in the alkoxy radical or acyl having 1-12 C atoms, or are naphthyl which is unsubstituted or substituted by one or more of C₁-C₈alkyl, C₁-C₄alkoxy, halogen, nitro, phenyl, phenoxy, alkoxycarbonyl having 1-4 C atoms in the alkoxy radical or acyl having 1-12 C atoms, arylene in each case is phenylene which is unsubstituted or substituted by one or more of C₁-C₈alkyl, C₁-C₄alkoxy, halogen, nitro, phenyl, phenoxy, alkoxycarbonyl having 1-4 C atoms in the alkoxy radical or acyl having 1-12 C atoms, or is naphthylene which is unsubstituted or substituted by one or more of C₁-C₈alkyl, C₁-C₄alkoxy, halogen, nitro, phenyl, phenoxy, alkoxycarbonyl having 1-4 C atoms in the alkoxy radical or acyl having 1-12 C atoms, and Q^{⊖} is SbF₆^{⊖}, AsF₆^{⊖} or SbF₅OH^{⊖}, components (a) and (b) being preesent in quantities such that the ratio of equivalents of epoxide to isocyanate groups in the mixture is from 0.1 to 5 and the curing agent (c) being employed in quantities of from 0.01 to 10 % by weight, based on the quantity of components (a) and (b).

2. A mixture according to claim 1, in which the epoxy resin (a) is an aliphatic, cycloaliphatic or aromatic di- or polyepoxide compound.

3. A mixture according to claim 1, in which the epoxy resin (a) is an aromatic epoxy resin.

4. A mixture according to claim 1, in which the di- or polyisocyanate compound (b) is an aliphatic, cycloaliphatic or aromatic isocyanate.

5. A mixture according to claim 1, in which the di- or polyisocyanate compound (b) is an isomer mixture of 4,4'- and 2,4'-diisocyanatodiphenylmethane, polyol-modified polyisocyanate, or a mixture of liquid polyisocyanates or of liquid polyisocyanates with carbodiimide-polyisocyanates.

6. A mixture according to claim 1, in which component (c) is a sulphonium salt of the formula I or II.

7. A mixture according to claim 1, in which component (c) is a sulfonium salt of the formula I or II in which A is C₁-C₁₂alkyl, Ar, Ar₁ and Ar₂ independently of one another are each phenyl which is unsubstituted or substituted by one or more of C₁-C₈alkyl, C₁-C₄alkoxy, Cl or Br and Q^{⊖} is SbF₆^{⊖} or SbF₅OH^{⊖}.

8. A mixture according to claim 1, in which component (c) is a sulfonium salt of the formula II in which Ar, Ar₁ and Ar₂ independently of one another are each phenyl which is unsubstituted or substituted by C₁-C₈alkyl, C₁-C₄alkoxy, Cl or Br and Q^{⊖} is SbF₆^{⊖} or SbF₅OH^{⊖}.

9. A mixture according to claim 1, comprising tris(p-methylbenzyl)sulfonium hexafluoroantimonate, tribenzylsulfonium hexafluoroantimonate or dibenzylphenylsulfonium hexafluoroantimonate as component (c).

10. A product obtained by thermal curing of a mixture according to claim 1.

## Revendications

1. Mélanges thermodurcissables contenant
(a) une résine époxyde avec en moyenne plus d'un groupe 1,2-époxyde dans la molécule,
(b) un composé de di- ou de polyisocyanate et
(c) un sel de sulfonium de formules I à IV 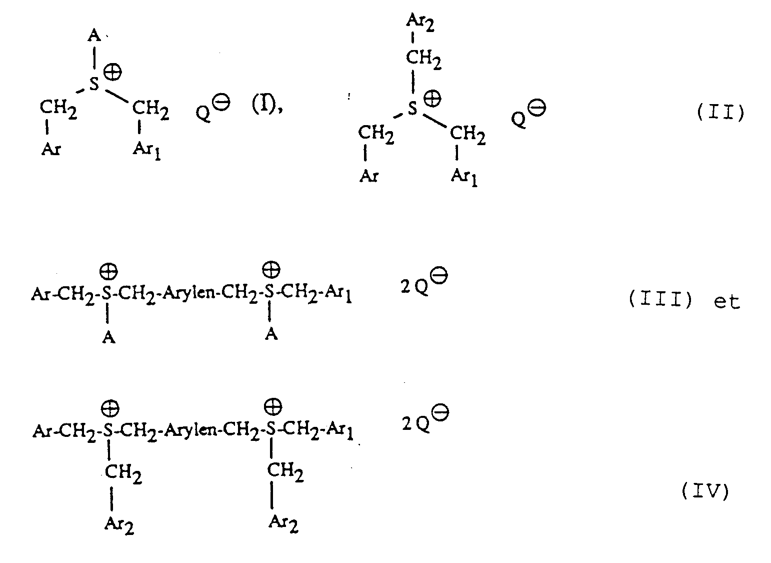 où A représente les alkyle en C₁-C₁₂, cycloalkyle en C₃-C₈, cycloalkylalkyle en C₄-C₁₀, phényle non substitué ou substitué une ou plusieurs fois par des alkyle en C₁-C₈, alcoxy en C₁-C₄, halogène, nitro, phényle, phénoxy, alcoxycarbonyle avec 1 a 4 atomes de carbone dans le radical alcoxy ou acyle avec 1 à 12 atomes de carbone, Ar, Ar₁ et Ar₂, indépendamment l'un de l'autre, représentent respectivement un phényle non substitué ou substitué une ou plusieurs fois par les alkyle en C₁-C₈, alcoxy en C₁-C₄_{,} halogène, nitro, phényle, phénoxy, alcoxycarbonyle avec 1 à 4 atomes de carbone dans le radical alcoxy ou acyle avec 1 à 12 atomes de carbone ou un naphtyle non substitué ou substitué une ou plusieurs fois par les alkyle en C₁-C₈, alcoxy en C₁-C₄, halogène, nitro, phényle, phénoxy, alcoxycarbonyle avec 1 à 4 atomes de carbone dans le radical alcoxy ou acyle avec 1 à 12 atomes de carbone, l'arylène représente chaque fois un phénylène non substitué ou substitué une ou plusieurs fois par les alkyle en C₁-C₈, alcoxy en C₁-C₄, halogène, nitro, phényle, phénoxy, alcoxycarbonyle avec 1 à 4 atomes de carbone dans le radical alcoxy ou acyle avec 1 à 12 atomes de carbone ou un naphtylène non substitué ou subscitué une ou plusieurs fois par les alkyle en C₁-C₈, alcoxy en C₁-C₄, halogène, nitro, phényle, pnénoxy, alcoxycarbonyle avec 1 à 4 atomes de carbone dans le radical alcoxy ou acyle avec 1 à 12 atomes de carbone et Q^{Θ} représente les SbF₆^{Θ}, AsF₆^{Θ} ou SbF₅OH^{Θ}, les composants (a) et (b) étant contenus dans de telles quantités que le mélange contienne un rapport équivalent des groupes époyyde aux groupes isocyanate de 0,1 à 5 et que l'agent de durcissement (C) soit contenu en quantités de 0,01 à 10 % en poids par rapport à la quantité des composants (a) et (b).

2. Mélanges selon la revendication 1, dans lesquels la résine époxyde (a) représente un composé di- ou polyépoxyde aliphatique, cycloaliphatique ou aromatique.

3. Mélanges selon la revendication 1, dans lesquels la résine époxyde (a) est une résine époxyde aromatique.

4. Mélanges selon la revendication 1, dans lesquels les composés de di- ou de polyisocyanates (b) représentent un isocyanate aliphatique, cycloaliphatique ou aromatique.

5. Mélanges selon la revendication 1, dans lesquels le composé de di- ou de polyisocyanates (b) représente un mélange d'isomères 4,4'- et 2,4'-diisocyanatodiphénylméthane, de polyisocyanate modifié par des polyols, un mélange de polyisocyanates liquides ou de polyisocyanates liquides avec des carbodiimidespolyisocyanates.

6. Mélanges selon la revendication 1, dans lesquels le composant (c) représente un sel de sulfonium de formule I ou II.

7. Mélanges selon la revendication 1, dans lesquels le composant (c) représente un sel de sulfonium de formule I ou II, dans lesquels A représente un alkyle en C₁-C₁₂, Ar, Ar₁ et Ar₂, indépendamment l'un de l'autre, représentent chacun un phényle non substitué ou substitué une ou plusieurs fois par des alkyle en C₁-C₈, alcoxy en C₁-C₄, Cl ou Br et Q^{Θ} représente les SbF₆^{Θ} ou SbF₅OH^{Θ}.

8. Mélanges selon la revendication 1, dans lesquels le composant (c) représente un sel de sulfonium de formule II, dans laquelle Ar, Ar₁ et Ar₂, indépendamment l'un de l'autre, signifient un phényle non substitué ou substitué par les alkyle en C₁-C₈, alcoxy en C₁-C₄, Cl ou Br et Q^{Θ} représente les SbF₆^{Θ} ou SbF₅OH^{Θ}.

9. Mélanges selon la revendication 1, contenant en tant que composants (c) l'hexafluoroantimoniate de tris(p-méthylbenzyl)-sulfonium, l'hexafluoroantimoniate de tribenzylsulfonium ou l'hexafluoroantimoniate de dibenzylsulfonium.

10. Produits obtenus par thermodurcissement des mélanges selon la revendication 1.
